(19) Europäisches Patentamt
European Patent Office
Office européen des brevets

(11) **EP 3 211 398 A1**

(12) **EUROPEAN PATENT APPLICATION**

(43) Date of publication:
**30.08.2017 Bulletin 2017/35**

(51) Int Cl.:
***G01N 15/06*** (2006.01)

(21) Application number: **16157467.8**

(22) Date of filing: **25.02.2016**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(71) Applicants:
• **Malvern Instruments Ltd**
**Worcestershire WR14 1XZ (GB)**
• **Paraytec Limited**
**Osbaldwick, York Yorkshire YO19 5UP (GB)**

(72) Inventors:
• **Latunde-Dada, Seyi**
**Malvern, Worcestershire WR14 1XZ (GB)**
• **Leszczszyn, Oksana**
**Malvern, Worcestershire WR14 1XZ (GB)**
• **Goodall, David**
**Osbaldwick**
**York, YO19 5UP (GB)**

(74) Representative: **Lawrence, John**
**Barker Brettell LLP**
**100 Hagley Road**
**Edgbaston**
**Birmingham B16 8QQ (GB)**

(54) **METHOD AND APPARATUS FOR DETERMINING DIFFUSION PROPERTIES OF A SAMPLE**

(57) A method (101) of determining a diffusion coefficient (D) or hydrodynamic radius of a solute in a solution flowing in a capillary is disclosed, comprising: obtaining a first Taylorgram (501) comprising a plurality of measurements of solute concentration measured at a first residence time; obtaining a second Taylorgram (502) comprising a plurality of measurements of solute concentration measured at a second residence time; determining a first front amplitude $A_1$ of a solute front from the first Taylorgram (501); determining a second front amplitude $A_2$ of a solute front from the second Taylorgram (502); calculating an actual front height ratio $A_2/A_1$ of the second front amplitude $A_2$ to the first front amplitude $A_1$; and deriving a value of the diffusion coefficient (D) or hydrodynamic radius of the solute from the actual front height ratio $A_2/A_1$.

100

| 101 |
|---|
| Obtain first Taylorgam |

| 102 |
|---|
| Obtain second Taylorgam |

| 103 |
|---|
| Determine $A_1$ |

| 104 |
|---|
| Determine $A_2$ |

| 105 |
|---|
| Calculate $A_2/A_1$ |

| 106 |
|---|
| Determine diffusion coefficient, $D$ |

Figure 1

EP 3 211 398 A1

**Description**

**Field of the Invention**

The invention relates to a method of determining diffusion properties of a sample, and more particularly doing so from Taylorgrams.

**Background**

Taylor dispersion analysis (TDA) is an absolute method for determining the diffusion coefficients, and hence the hydrodynamic radii of molecules. TDA has been used to analyze amino acids, peptides, proteins, small molecules, macromolecules, nanoparticles and biosensors.

Taylor dispersion within a capillary arises as a combination of the spreading due to axial convection which is regulated by molecular diffusion across the capillary radius. Hence, for TDA to be applicable, the measurement time must be long enough for radial diffusion and hence full dispersion to occur and the characteristic Gaussian concentration profiles to develop. This condition is usually expressed with a dimensionless quantity, the dimensionless residence time $\tau_m$, which is the ratio of the mean measurement time to the characteristic time required for a molecule to diffuse across a capillary radius. The residence time is a measure of the degree of dispersion and is typically required to be greater than 1.4. This implies that unfeasibly long measurement times are required for TDA to be applicable for large molecules (with small diffusion coefficients).

A dispersion solution that involves fitting the exact dispersion solution and which is applicable at all dispersion times has previously been used to extract the diffusion coefficients from early-time dispersion Taylorgrams (Latunde-Dada, Seyi, et al. "Methodologies for the rapid determination of the diffusion interaction parameter using Taylor dispersion analysis." Analytical Methods 8.2 (2016): 386-392). This approach, however, requires the location of the transition point between convection and dispersion. A determination of this location is prone to error and in some cases may be obscured by the response of smaller molecules, which may be present and which undergo full dispersion.

**Summary of the Invention**

In accordance with a first aspect of the invention there is provided a method of determining a diffusion coefficient $D$ or hydrodynamic radius of a solute in a solution flowing in a capillary. The method comprises obtaining a first Taylorgram comprising a plurality of measurements of solute concentration measured at a first residence time; obtaining a second Taylorgram comprising a plurality of measurements of solute concentration measured at a second residence time; determining a first front amplitude $A_1$ of a solute front from the first Taylorgram; determining a second front amplitude $A_2$ of a solute front from the second Taylorgram; calculating an actual front height ratio $A_2/A_1$ of the second front amplitude $A_2$ to the first front amplitude $A_1$; and deriving a value of the diffusion coefficient or hydrodynamic radius of the solute from the actual front height ratio $A_2/A_1$.

The first and second Taylorgrams may be obtained by measurement. The first Taylorgram may be obtained at a first position along the capillary, and the second Taylorgram may be obtained at a second position along the capillary. For example, the first and second Taylorgrams may both be obtained from the same injection of solute into the capillary.

Such a method may be used to provide a good estimate of the diffusion coefficient or hydrodynamic radius of large molecules (with a low diffusion coefficient), without the long measurement time usually required for TDA measurements.

The step of deriving a value of the diffusion coefficient or hydrodynamic radius may further comprise calculating a convection front height ratio $h$ expected for a pure convection regime. In some embodiments, the convection front height ratio $h$ may be calculated from the distance $l_1$ between the first residence time and a point of injection of the solute into the capillary, the distance $l_2$ between the second residence time and the point of injection of the solute into the capillary, and the initial length $l_{inj}$ of the solute injected into the capillary.

The step of deriving a value of the diffusion coefficient or hydrodynamic radius may further comprise calculating the proportion $f$ of the solute that dispersed between the first residence time and the second residence time. The proportion $f$ may be calculated using the actual front height ratio $A_2/A_1$ and the convection front height ratio $h$.

In some embodiments, the step of determining the first front amplitude may comprise determining a first time window during which a solute front is expected to reach the first residence time, and determining the peak amplitude of the first Taylorgram in the first time window. The step of determining the second front amplitude may comprise determining a second time window during which a solute front is expected to reach the second residence time, and determining the peak amplitude of the second Taylorgram in the second time window. The first time window or the second time window may be determined using the pressure at which the solute was injected into the capillary and the viscosity of a carrier fluid and/or the solution. The carrier fluid may drive the solution through the capillary.

Such embodiments may be particularly useful where multiple peaks may be recorded in the Taylorgram, for example if dispersion has occurred before the Taylorgram is measured, or if multiple plugs of sample are injected into the capillary. Determining the first and second window limits the likelihood of selecting an incorrect peak as the front peak.

Some embodiments may further comprise the step of determining a relationship, for example a constant of proportionality $\alpha$, between a diffusion coefficient and the proportion $f$ of a test sample of known diffusion coefficient. This step may be used, for example, to calibrate a system.

Some embodiments further comprise calculating a hydrodynamic radius of molecules of the solute from the calculated diffusion coefficient. In other embodiments the hydrodynamic radius may be determined more directly from the ratio $A_2/A_1$ without explicitly determining the hydrodynamic radius first. The well-known relationship between hydrodynamic radius and diffusion coefficient can be incorporated into the method, so that it determines the hydrodynamic radius without explicitly determining the diffusion coefficient as an intermediate step.

In some embodiments, the first and/or second Taylorgram may be measured at a time corresponding to a dimensionless residence time $\tau_m$ of 1.4 or less. Such short measurement times are usually not possible using conventional TDA.

According to a second aspect of the invention there is provided a method of measuring a diffusion coefficient or hydrodynamic radius of a solute in a solution flowing in a capillary. The method comprises:

> providing a solution flowing in a capillary;
> providing a first detector at a first residence time and a second detector at a second residence time;
> injecting a solute at a pressure into the capillary;
> detecting a measure of the concentration of the solute at the first residence time using the first detector and obtaining a first Taylorgram from the measurements of the first detector;
> detecting a measure of the concentration of the solute at the second residence time using the second detector obtaining a second Taylorgram from the measurements of the second detector; and
> determining a diffusion coefficient of the solute using the method of any embodiment of the first aspect.

In some embodiments, the measure of concentration of the solute detected by the first and/or second detectors may be the absorption of light of the solute, measured for example using an ultraviolet-visible spectrophotometer. Alternatively the measure of concentration may be determined by measuring the refractive properties of the solute.

In some embodiments, the solute may be injected into the capillary as a slug of solute or as a pulse of solute.

According to a third aspect of the invention there is provided an apparatus for determining a diffusion coefficient or hydrodynamic radius of a solute comprising a processor, the apparatus configured to perform a method of any preceding claim. The apparatus may further comprise an instrument for performing a Taylor dispersion analysis, so as to obtain a Taylorgram.

The instrument may comprise: a pump; a capillary; a light source; a first detector and a second detector. The pump may be configured to cause fluid flow in the capillary. The capillary may comprise a first window region, adjacent the first detector, and a second window region, adjacent the second detector. The light source may be configured to illuminate the first and second detector through interior of the capillary at the first and second respective window regions. The first and second detectors may be configured to detect the absorbance of fluid in the capillary at the respective first and second windows.

**Detailed Description**

The invention is described in further detail below by way of example and with reference to the accompanying drawings, in which:

> figure 1 is a schematic of a method for calculating the diffusion coefficient of a solute;
> figure 2 is a schematic of an embodiment of calculating the diffusion coefficient;
> figure 3 is an example Taylorgram for a solute in a pure convection regime;
> figure 4 is a schematic of an alternative embodiment of calculating the diffusion coefficient;
> figure 5 is an example of a Taylorgram for a real solute in solution;
> figure 6 is a schematic of an alternative method for calculating the diffusion coefficient of a solute;
> figure 7 is a schematic of an embodiment of determining the peaks in the first and second Taylorgrams;
> figure 8 is a schematic of an apparatus according to an embodiment;
> figure 9 shows measured Taylorgrams for a solute in a solution;
> figure 10 shows measured Taylorgrams for a solute in a solution;
> figure 11 shows the correlation between 1-$f$ and $\tau_m$ for the Taylorgrams of figures 9 and 10;
> figure 12 shows measured Taylorgrams for a solute in a solution;

figure 13 shows measured Taylorgrams for a solute in a solution;
figure 14 shows the correlation between 1-$f$ and $\tau_m$ for the Taylorgrams of figures 12 and 13;
figure 15 shows the global correlation for the Taylorgrams of figures 9, 10, 12, and 13;
figure 16 shows measured Taylorgrams for a solute in a solution;
figure 17 shows measured Taylorgrams for a solute in a solution.

Taylor dispersion is a process by which shear flow is used to enhance the effective diffusivity of a sample. Laminar flow in a capillary results in a variation in flow velocity with radial location. Near the walls, the flow is substantially stationary, and flow velocity is at a maximum at the centre. This results in shearing of the adjacent lamina, which acts to enhance dispersion of a sample.

Taylor dispersion analysis (TDA) can be used to analyse properties of species within a sample. A plug of the sample may be injected into a capillary and subsequently disperse as it traverses along the capillary within a laminar flow regime. The injected plug of the sample may be narrow (having a short duration) this being referred to as a pulse of the sample, resulting in a pulse Taylorgram. Alternatively the injected plug of the sample may be long (i.e. having a longer duration) this may be referred to as a slug of the sample, resulting in a frontal Taylorgram. The degree of dispersion exhibited by the plug is dependent on the diffusivity of the molecules within the plug and can be measured at one or multiple points downstream of the injection site. A concentration detector, responsive to the species of the sample, may be positioned at one or more locations downstream of the injection location. The concentration detector or detectors (e.g. a UV-Visible spectrophotometer) may thereby produce a signal that is proportional to the concentration of the molecules in each cross-section of the flow past the detector. The resultant signal from the detector, typically referred to as a Taylorgram, corresponds to a temporally-resolved distribution of molecular concentration.

In the embodiments described below, a first Taylorgram is measured at a first time at a first position along the capillary using a first detector, and a second Taylorgram is subsequently measured at a second time at a second position along the capillary using a second detector. The full set of measurements can thus be taken using only one injection of solute into the capillary. However, any embodiment described below may be modified so that the first and second Taylorgrams are taken at the same position along the capillary, using the same detector. In a first run, the solute may be driven along the capillary by a first pressure or at a first speed, so that it reaches the measuring position at a first time, and the first Taylorgram can be taken. In a second run, the solute may be driven along the capillary by a second pressure or at a second speed, so that it reaches the measuring position at a second time, and the second Taylorgram can be taken.

Conventionally, TDA can only be used to determine the diffusion coefficient $D$ of a solute if the solute is fully dispersed. A measure of the dispersion is given by the dimensionless residence time $\tau_m$, defined as

$$\tau_m = \frac{D t_m}{r_c^2}, \qquad\qquad \text{(Eq. 1)}$$

where $D$ is the diffusion coefficient, $r_c$ is the capillary radius, and $t_m$ is the mean measurement time, which is equivalent to the time it would take a particle travelling at the average flow speed to arrive at the measurement point. A value of $\tau_m$ greater than 1.4 is generally used as the condition for full dispersion, and hence for applicability of TDA. For large molecules, however, the typically low value of $D$ means that long measurement times are required to meet this condition.

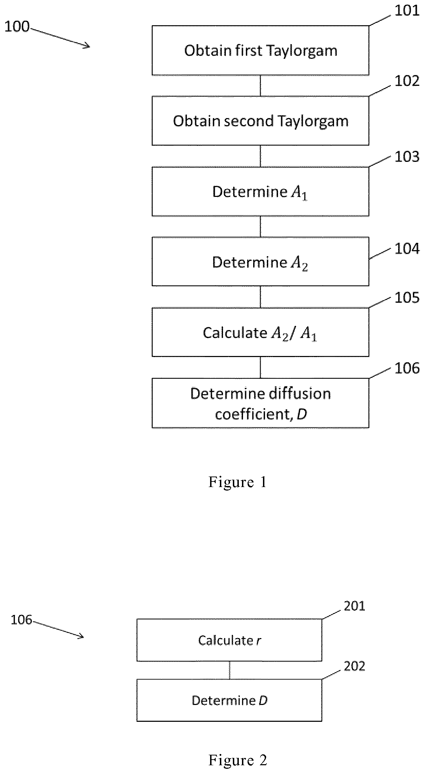

Referring to figure 1, a method 100 for determining a diffusion coefficient $D$ of a solute in a solution flowing in a capillary is illustrated. Method 100 can be used to determine a value for $D$ using measurements taken at early times, before the full dispersion condition is met. Method 100 can therefore reduce the time needed to measure $D$ for large molecules with low diffusion constants.

At step 101 of method 100, a first Taylorgram is obtained by measuring the concentration of the solute at a first position in the capillary. At step 102, a second Taylorgram is obtained by measuring the concentration of the solute at a second position in the capillary. The Taylorgrams obtained at 101 or 102 may be generated from a slug or pulse injection of solute into the capillary.

Each Taylorgram typically comprises a sharp rise in concentration corresponding to the arrival of the solute front, followed by a long tail. The solute front corresponds to the arrival of fast moving molecules travelling at or near the central streamline at the measurement point.

A first front amplitude $A_1$ of the solute front is determined from the first Taylorgram at step 103. A second front amplitude $A_2$ of a solute front from the second Taylorgram is determined at step 104. At step 105, the ratio $A_2/A_1$ of the second front amplitude $A_2$ to the first front amplitude $A_1$ is calculated.

The ratio $A_2/A_1$ is related to the amount of dispersion experienced by the solute between the first measuring position and the second measuring position. At step 106, this ratio is used to derive a value of the diffusion coefficient of the solute. Once the diffusion coefficient has been calculated, other parameters can be calculated, such as the hydrodynamic radius of the molecules of the solute, which is related to the diffusion coefficient.

As shown in the embodiment of figure 2, the step 106 of method 100 may further comprise step 201 of calculating a convection front height ratio $h$ expected for a pure convection regime - i.e. where there is no dispersion of the solute. A comparison of the actual ratio $A_2/A_1$ to the convection ratio $h$ is then used at step 202 to calculate the diffusion coefficient D.

The ratio $h$ for the pure convection regime may be calculated by considering the dispersion equation for a short injection of solute for a measurement at time t taken a distance x away from the point of injection:

$$\frac{\partial C}{\partial t} + u \frac{\partial C}{\partial x} = k \frac{\partial^2 C}{\partial x^2}. \qquad \text{(Eq. 2)}$$

Under pure convection, the diffusion term on the right hand side of Eq. 2 is neglected and the solution obtained for the average concentration distribution $C_C$ is:

$$C_c = 0: \left( t \leq \frac{t_m}{2} \right)$$

$$C_c = C_0 \left[ 1 - \frac{t_m}{2t} \right] : \left( \frac{t_m + 2t_{inj}}{2} \geq t \geq \frac{t_m}{2} \right)$$

$$C_c = \frac{C_0}{2} \frac{t_{inj}}{t^2} \left[ t_m + 2t_{inj} \right] : \left( t \geq \frac{t_m + 2t_{inj}}{2} \right) \qquad \text{(Eq. 3)}$$

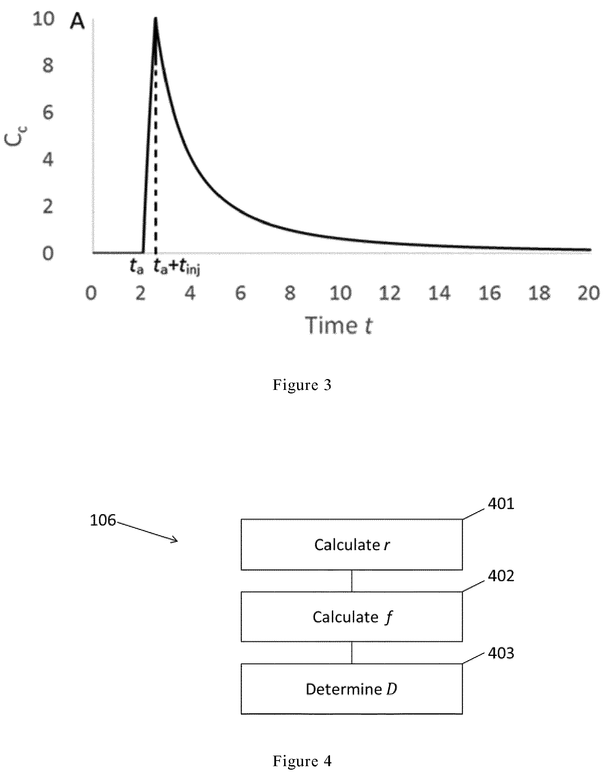

where $t_{inj}$ is the time over which the solute was injected into the capillary and $t_m$ is the mean measurement time which is equivalent to the time it would take a particle travelling at the average flow speed to arrive at the measurement point. The second term of the expression describes the steep rise in the profile when molecules travelling along the central streamline at twice the average flow speed arrive at the measurement point whilst the third term describes the long tail observed subsequent to the rise. Both these features are observable in Figure 3, which shows a Taylorgram for a solute undergoing pure convection (with the parameters $C_0 = 50$, $t_m = 4$, $t_{inj} = 0.5$).

From Eq. 3, the peak amplitude $A$ of the front is given by

$$A = C_0 \frac{2t_{inj}}{t_m + 2t_{inj}} \qquad \text{(Eq. 4)}$$

Defining the time of first arrival of the solute as $t_a = \frac{t_m}{2}$, Eq. 4 can be rewritten as

$$A = C_0 \frac{t_{inj}}{t_a + t_{inj}} \qquad \text{(Eq. 5)}$$

Hence, the absorbance corresponding to the initial concentration of the solute can be deduced from the measured peak amplitude as shown in Eq. 6

$$C_0 = A \frac{t_a + t_{inj}}{t_{inj}} \qquad \text{(Eq. 6)}$$

Likewise, the ratio $h$ of the peak amplitudes $A_1$ and $A_2$ measured at two measurement points labelled (1) and (2) respectively is given by

$$h = \frac{A_2}{A_1} = \frac{t_{a,1} + t_{inj}}{t_{a,2} + t_{inj}} \qquad \text{(Eq. 7)}$$

where $t_{a,1}$ and $t_{a,2}$ are the corresponding times of first arrival of the solute at the measuring position for the first residence time and the second residence time. For embodiments comprising a first and second measuring position (i.e. where a single injection of solute and two detectors are used), Eq. 7 can be re-written in terms of the respective distances $l_1$ and $l_2$ from the injection point to give

$$h = \frac{A_2}{A_1} = \frac{l_1 + l_{inj}}{l_2 + l_{inj}} \qquad \text{(Eq. 8)}$$

where $l_{inj}$ is the length of the injected solute in the capillary. Hence for a given injection length and fixed measurement points, the ratio $h$ is a constant if the solute undergoes pure convection.

Thus Eq.8 can be used to calculate $h$ at step 201, which can be used to determine the diffusion coefficient of the solute at step 202.

Figure 4 shows an alternative embodiment of the step 106 of method 100. In this embodiment, the ratio $h$ for a pure convection regime is calculated as above at step 401. At step 402, the proportion $f$ of the solute that dispersed between the first measuring point and the second measuring point is calculated. At step 403, the diffusion coefficient of the solute is determined from this proportion $f$.

Equation 8 describes the ratio of Taylorgram front peak heights that would be expected from a pure convection regime, where the solute does not disperse. In reality, the solute will undergo some dispersion at early times before becoming fully dispersed at times from which the dimensionless residence time $\tau_m > 1.4$. This early time dispersion will affect the actual front peak heights measured in an experiment, allowing information about the amount of dispersion, and hence the diffusion coefficient, to be extracted.

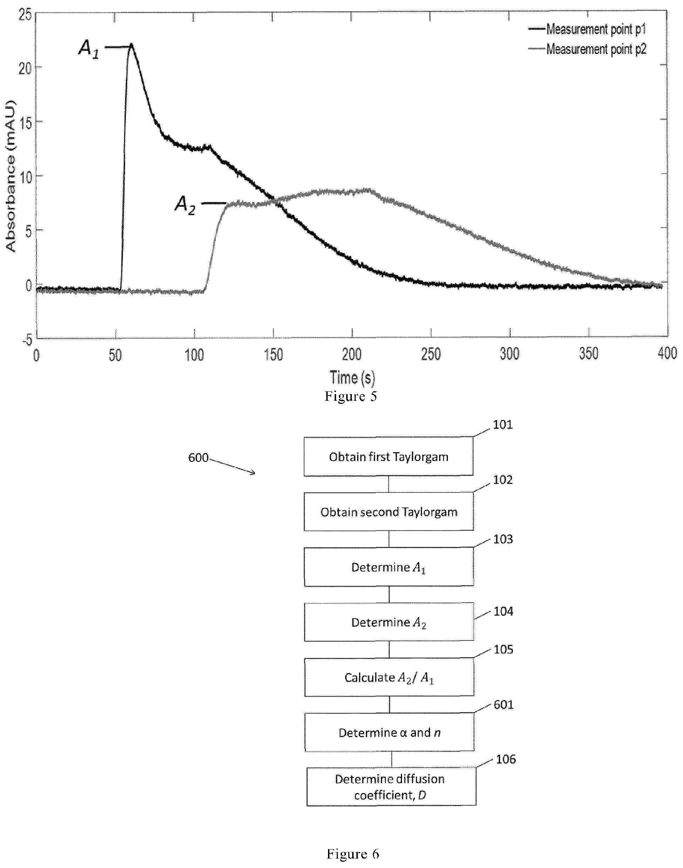

Figure 5 shows examples of a first 501 and second 502 early-time Taylorgram obtained from two measurement points along a capillary. The solute was nanospheres of 100nm hydrodynamic radius in 0.01M NaCl, injected at a pressure of 500 mbar. The broad peaks observed after the initial fronts at $t \sim 2t_a$ indicate that some solute dispersion has occurred behind the front and, as expected, this is more pronounced at measurement point (2) which is further away from the injection point.

Furthermore, the amplitudes $A_1$ and $A_2$ of the fronts are reduced in comparison to the values expected for pure convection. However, using Eq. 6, it is possible to estimate how much of the injected solute is convected $C_c$ from

$$C_n = A_n \frac{t_{a,n} + t_{inj}}{t_{inj}} \qquad \text{(Eq. 9)}$$

where $n = 1, 2$.

Due to the increased dispersion with time, $C_2 < C_1$ and the difference $C_1 - C_2$ is an estimate of the amount of solute that has dispersed upon travelling from measurement point (1) to (2). Expressing this as a fraction of $C_1$ gives the proportion $f$ of the dispersed component as:

$$f = \frac{C_1 - C_2}{C_1} = 1 - \left(\frac{A_2}{A_1}\right)\left(\frac{t_{a,2} + t_{inj}}{t_{a,1} + t_{inj}}\right) = 1 - \frac{A_2}{hA_1} \qquad \text{(Eq. 10)}$$

Hence $f$ is a measure of the degree of dispersion undergone by the solute which is equal to 1 for full dispersion (when $A_2 = 0$) and equal to 0 for pure convection (when $A_2 = hA_1$).

As mentioned earlier, the mean dimensionless residence time $\tau_m$ is another measure of the degree of solute dispersion (proportional to the diffusion coefficient $D$) and therefore a correlation between $\tau_m$ and $f$ is expected. Assuming a power-law relationship between the two quantities, this may be expressed as:

$$\tau_m = \alpha f^n$$

(Eq. 11)

where $\alpha$ and $n$ are constants to be determined for a particular set of measurement conditions. Note that when $f$ = 1 and the solute is fully dispersed, $\tau_m > \alpha$ is otherwise the condition for full dispersion and hence $\alpha$ is expected to be of the order of 1.

Furthermore since $\tau_m$ is approximately equal to the average number of times a particle diffuses across the capillary radius during the time of measurement, it is therefore a measure of the average dispersion distance of the solute molecules which may be assumed to be proportional to the fraction of the solute molecules that are fully dispersed. Hence, the constant $n$ is expected to be approximately equal to 1.

For the experimental measurements given herein by way of example (described later), $\alpha$ was determined to be 3.81, and $n$ determined to be 1. As shown in figure 6, a method 600 may comprise all of the steps 101-106 of method 100, with the additional step 601 of determining the values of $\alpha$ and/or $n$. Step 601 may include obtaining Taylorgrams for samples of known diffusion coefficient or hydrodynamic radius, and extracting values of $\alpha$ and/or $n$, for example by following the methodology described in the results section below.

Therefore, Eq. 11 can be used in step 403 to determine the diffusion coefficient D using the proportion of solute that dispersed between two points, which in turn can be calculated using the amplitudes of the fronts of Taylorgrams measured at two positions along a capillary.

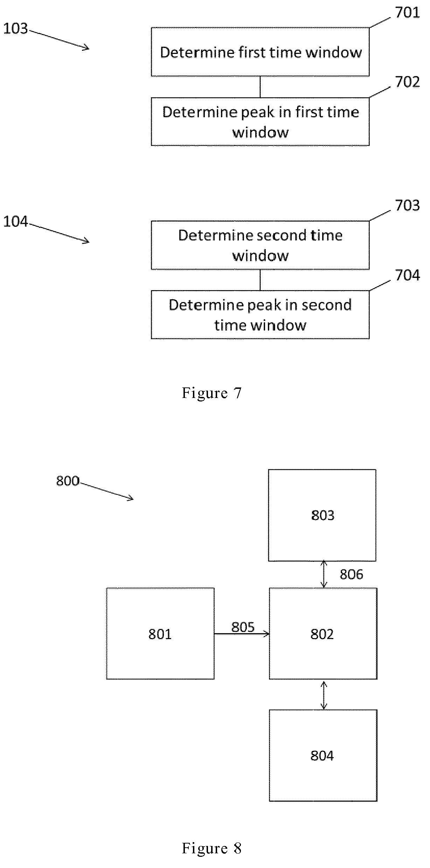

Figure 7 shows an alternative embodiment of the steps 103, 104 of determining the front amplitudes $A_1$ and $A_2$ from the first and second Taylorgrams respectively. In some Taylorgrams, the maximum amplitude of the whole measured Taylorgram may not correspond to the solute front. This is the case, for example, in the Taylorgram shown in figure 5 measured at point 2. The peak at ~200 s is larger than the amplitude of the front, due to the effects of dispersion of the solute.

In order to identify the correct time and amplitude that corresponds to the solute front, step 103 may comprise the step 701 of determining a first time window during which a solute front is expected to reach the first measuring position, and the step 702 of determining the peak amplitude of the first Taylorgram in the first time window.

Similarly, step 104 may comprise the step 703 of determining a second time window during which a solute front is expected to reach the second measuring position, and the step 702 of determining the peak amplitude of the second Taylorgram in the second time window.

The first and second time windows may be calculated for example by considering the pressure or velocity at which the solute was injected into the capillary, and the viscosity of the solution.

This disclosure describes a dispersion solution which is applicable at all dispersion times and has been used to extract the diffusion coefficients from early-time dispersion Taylorgrams. Determinations of diffusion coefficients with this approach may be particularly advantageous in situations where large particles constitute all or part of the sample. This case can be exemplified by any sample containing aggregated material, such as a biotherapeutic drug formulation. In these cases, measurement times in the order of hours would be required to ensure the dispersive regime is achieved for all components to allow traditional TDA. In addition, since the size of the aggregated particles is typically unknown, the run conditions required to achieve full dispersion for all components is also unknown, so data from multiple measurements with varying run conditions may need to be acquired. Using a method according to an embodiment may result in a practical measurement time (in the order of minutes), since full dispersion is not required, and both convective and dispersive components can be analysed simultaneously. The need for prior knowledge of sample components and, in turn, the need the need for fine-tuning run conditions in order to generate the appropriate data may also eliminated. Furthermore, the method also extracts information on the concentration of the convective component, as well as the dispersive component. This is advantageous over other orthogonal techniques, such as SEC or DLS, for which: only qualitative data may be available, insufficient resolution between components may exist, larger components may be excluded from the measurement or sample modification may be required.

Methods in accordance with an embodiment can also provide faster characterisation of particles of any size provided that a reliable convective regime can be established. This may be particularly beneficial for reducing measurement times and increasing throughput for screening applications.

In cases where the signal response is limited by the amount of material available, for example by low sample concentrations, small injected volumes or by a low extinction coefficients; the proposed method would allow analyses of data acquired at earlier detection points where signal responses are generally greater and, more importantly, where sufficient signal is retained to make analyses possible. Applications that would benefit from this include characterization of eluents from a nano-LC column or other separation mechanism, whose signal may not be detected if fully dispersed due to peak broadening into the baseline noise.

<u>Apparatus</u>

Referring to Figure 8, an apparatus 800 is shown in accordance with an embodiment. The apparatus 800 comprises an instrument 801, processor 802, output means 803 and input means 804. The instrument 801 is operable to perform a Taylor dispersion analysis on a sample at two different points along a capillary, so as to produce Taylorgram data 805 for a first and second measurement position. The processor 802 is configured to calculate a diffusion coefficient $D$ of the solute from the Taylorgram data 71, in accordance with an embodiment (for instance as described above). The processor 802 may provide an output 806 to the output means 803, which may comprise a display or printer. The output 806 may comprise values or estimates of the properties of the sample analysed by the instrument 801 for example the diffusion coefficient $D$, or the hydrodynamic radius of the molecules of the solute. An input means 804 may be provided for controlling the processor 802 and/or instrument 801. The input means 804 may comprise a keyboard, mouse or other suitable user interface device.

The instrument 801 may comprise a capillary linking a first and second container. Liquid is driven (e.g. at constant pressure) from the first container to the second container. The first container may contain a run (or carrier) solution so that the capillary is initially filled with the run solution. The first container may then be disconnected from the capillary, and a third container connected that contains a sample solution. The sample may be a pharmaceutical or biopharmaceutical species dissolved either in the run/carrier solution, or in a different medium. The different medium may differ from the run/carrier solution in having an excipient, e.g. a salt or a sugar, dissolved at a different concentration than in the carrier/run solution. This is may be appropriate in formulations which are designed to stabilise active drug species.

A first and second window may be spaced apart along the length of the capillary between the first and second containers. The capillary may be formed in a loop so that the first and second both window may be imaged using a single optical assembly, for instance by arranging for them to be adjacent to one another in an area imaged by the pixel array of an area imaging detector. In other embodiments, the detector may comprise a single element, rather than a pixel array.

To inject a plug of the sample into the capillary, the third container may be connected to the capillary and then disconnected after a suitable volume of the sample has been injected under pressure. The second container may be connected to the capillary when the third container is disconnected from the capillary. The detector may capture a frame sequence comprising measures of the received light intensity at the detector as the pulse of sample solution or the flow front passes the first and second window. The detector output thereby provides data on absorbance versus time: a Taylorgram. In alternative embodiments, the detector may be configured to detect the refractive properties of the solute, and thus to determine the concentration of the solute passing the measuring position.

<u>Example results</u>

Nanospheres™ 3000 Series size standards with nominal hydrodynamic radii of 30, 100, 200 and 250 nm were purchased from Fisher Scientific, Leicestershire, UK and prepared in 0.01 M NaCl (Sigma Aldrich, Suffolk, UK; note standards supplied in diameter 60, 200, 400 and 500 nm, respectively) to a final concentration of 4 drops of size standard per millilitre of NaCl. From these stock solutions, various binary mixtures were also prepared in a 50:50 (v/v) ratio. In addition, binary mixtures of nanospheres and 2.5 mg/mL Bovine Serum Albumin (BSA, Sigma Aldrich, Poole, UK; $R_h$ ~3.8 nm; prepared in 0.01 M NaCl) were prepared in a 50:50 (v/v) ratio. Taylorgrams were acquired using the Viscosizer TD instrument (Malvern Instruments Ltd., Worcestershire, UK) fitted with a standard two-window uncoated capillary (ID 75 $\mu$m, OD 360 $\mu$m, Malvern Instruments Ltd, Worcestershire, UK) having dimensions $l_1$ = 0.45 m and $l_2$ = 0.85 m for the distances from the inlet to two detection windows and a total capillary length of 1.30 m. Delivery of narrow solute plugs was achieved by pressure-driven injection at 50 mbar for 12 s. From these injection conditions and the capillary dimensions, the front height ratio $h$ for pure convection was determined from Equation 8 to be 0.53.

Elution of sample plugs was undertaken at a variety of run pressures ranging from 350 to 2000 mbar. Table 1 shows the radii of the nanospheres and the corresponding run pressures used for the measurements (with $m$ being the total number of measurements for each row). The measurements were split into three groups as shown in the table. Group I consists of nanospheres with hydrodynamic radii of 30, 100, 200 and 250 nm run at pressures ranging from 350 to 1000 mbar. Group II consists of the nanospheres with the same radii as Group I run at pressures ranging from 1250 to 2000 mbar. Group III consists of measurements at a run pressure of 250 mbar of (a) 100 and 200 nanospheres individually, (b) a binary mixture of 100 and 200 nm nanospheres and (c) binary mixtures of 2.5 mg mL$^{-1}$ BSA with the 100 or 200 nm nanospheres, as well as a tertiary BSA: 100:200 nm mixture.

**Table 1: Grouped measurements**

| Group | Solute hydrodynamic radii | Pressure/mbar | $m$ |
|---|---|---|---|
| I | 30 nm | 833, 1000 | 6 |
| | 100, 200, 250 nm | 350-1000 | 36 |
| II | 30 nm | 1000 - 3000 | 27 |
| | 100, 200, 250 nm | 1000 - 2000 | 16 |
| III | 100, 200, 100 + 200 nm | 250 | 15 |
| | BSA + 100 nm, BSA + 200 nm, BSA + (100 + 200 nm) | 250 | 15 |

The heights, $A_1$ and $A_2$, of the fronts were determined by subtracting the value of the baseline at the time of first arrival of the front from the measured maximum front amplitude value. The correlation between $f$ and $\tau_m$ was determined from Groups I and II. This correlation was used to make predictions for the measurements in Group III and the results compared with the expected values.

Correlation from Group I

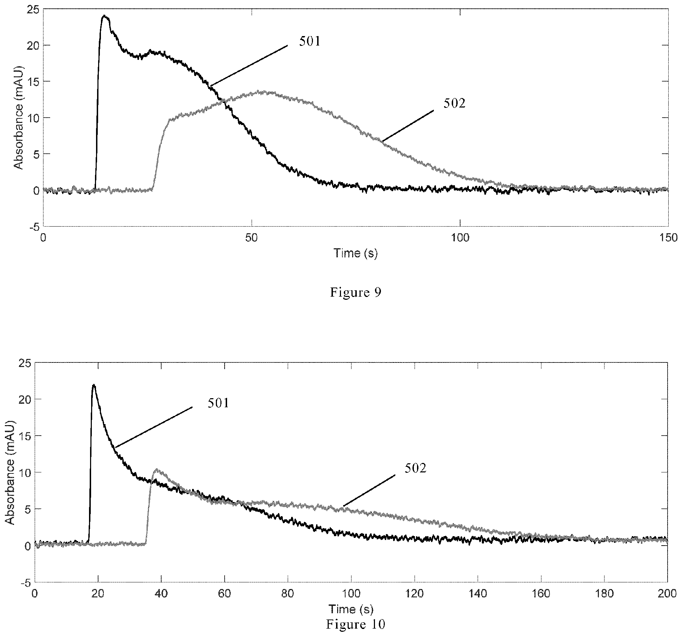

Figures 9 and 10 show examples of the Taylorgrams obtained from the measurements in Group I. Figure 9 shows a first 501 and second 502 Taylorgram obtained for 30 nm nanospheres in NaCl at a run pressure of 1000 mbar. Figure 10 shows a first 501 and second 502 Taylorgram obtained for 100 nm nanospheres in NaCl at a run pressure of 750 mbar.

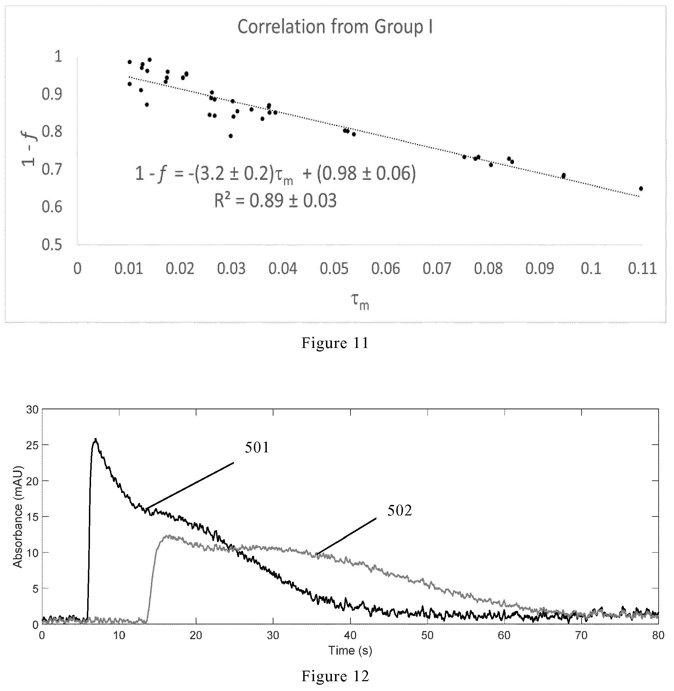

Figure 11 shows a plot of (1-$f$) against $\tau_m$ for these Group I measurements. An approximately linear relationship is observed between these two variables and the equation for the regression line is shown on the plot as well as the corresponding value for the goodness of fit $R^2$. These measurements therefore imply a value of 1 for $n$ and 3.2 for $\alpha$ in Eq. 11.

Correlation from Group II

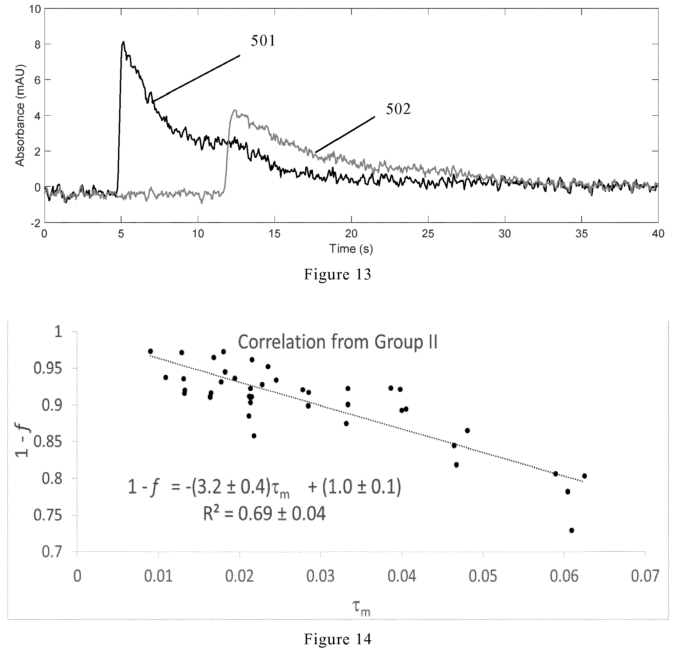

Figures 12 and 13 show examples of the Taylorgrams obtained from the measurements in Group II. Figure 12 shows a first 501 and second 502 Taylorgram for 30 nm nanospheres in NaCl at a run pressure of 1750 mbar. Figure 13 shows a first 501 and second 502 Taylorgram for 200 nm nanospheres in NaCl at a run pressure of 2000 mbar.

Figure 14 shows a plot of (1-$f$) against $\tau_m$. The equation for the regression line is shown as well as the goodness of fit which imply a value of 1 for $n$ and 3.2 for $\alpha$ in Eq. 11.

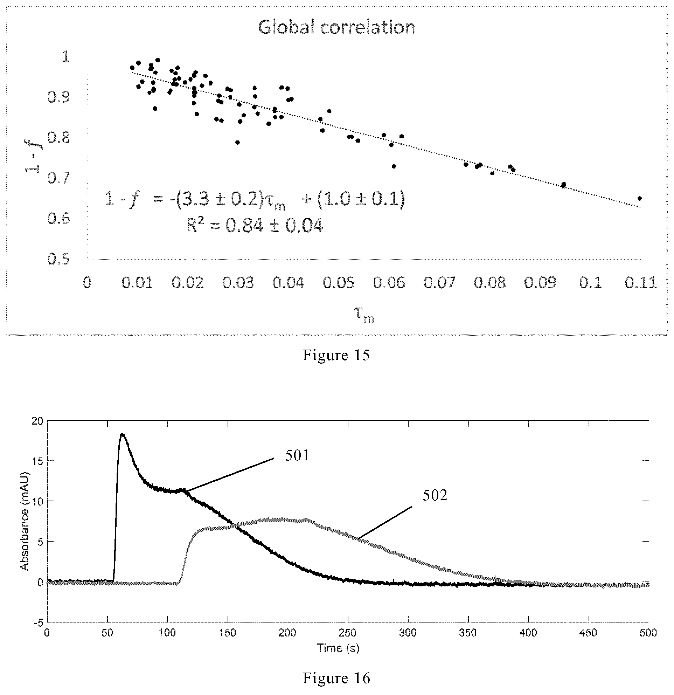

There is a good agreement between the correlations obtained from the two groups. A global fit of Groups I and II is shown in figure 15 as well as the equation for the regression line. This gives a value of 3.3 for $\alpha$.

Estimates for Group III

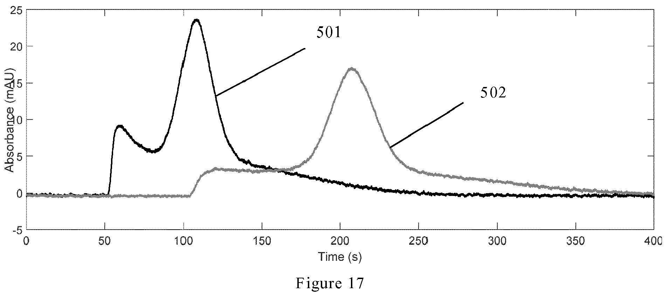

Figures 16 and 17 show examples of Taylorgrams obtained from the measurements in Group III. Figure 16 shows a first 501 and second 502 Taylorgram obtained for 100 nm nanospheres in 0.01 M NaCl at a run pressure of 250 mbar. Figure 17 shows a first 501 and second 502 Taylorgram for BSA+ (100 + 200) nm nanospheres in NaCl at a run pressure of 250 mbar.

The equation for the regression line from the global fit to Groups I and II was used to estimate $\tau_m$ and hence the hydrodynamic radii $R_h$ from the diffusion coefficients $D$. The results from the correlation are compared to the expected values in Table 2. Note that the expected values for the mean radii of the mixtures have been determined by weighting the radii of the two components by the relative heights of the fronts observed for the individual measurements.

**Table 2: Expected hydrodynamic radii $R_h$ from the correlation**

| Measurement | Expected $R_h$/nm | Estimated $R_h$/nm |
|---|---|---|
| 100 nm | 100 | $99 \pm 3$ |
| 200 nm | 200 | $197 \pm 18$ |
| 100 + 200 nm | 140 | $143 \pm 5$ |
| BSA + 100 nm | 100 | $106 \pm 5$ |

(continued)

| Measurement | Expected $R_h$/nm | Estimated $R_h$/nm |
|---|---|---|
| BSA + 200 nm | 200 | 203 $\pm$ 27 |
| BSA + (100 + 200 nm) | 140 | 123 $\pm$ 15 |

As can be seen from Table 2, reasonable estimates are obtained for the hydrodynamic radii of the nanospheres both in isolation and in the presence of fully dispersed BSA molecules. This is expected since the heights of the fronts are used in the analysis and the contribution of the BSA molecules at these early times is negligible. The hydrodynamic radii of BSA was determined from the convective- dispersive fits described in the literature, and found to be 4.3 +/- 0.5 nm. This is higher than the expected value of 3.8 nm because the nanospheres also contribute to the dispersed peaks.

Other embodiments are intentionally within the scope of the invention as defined by the appended claims.

**Claims**

1. A method of determining a diffusion coefficient or hydrodynamic radius of a solute in a solution flowing in a capillary, comprising:

   obtaining a first Taylorgram comprising a plurality of measurements of solute concentration measured at a first residence time;
   obtaining a second Taylorgram comprising a plurality of measurements of solute concentration measured at a second residence time;
   determining a first front amplitude $A_1$ of a solute front from the first Taylorgram;
   determining a second front amplitude $A_2$ of a solute front from the second Taylorgram;
   calculating an actual front height ratio $A_2/A_1$ of the second front amplitude $A_2$ to the first front amplitude $A_1$; and
   deriving a value of the diffusion coefficient or hydrodynamic radius of the solute from the actual front height ratio $A_2/A_1$.

2. The method of claim 1, wherein the step of deriving a value of the diffusion coefficient or hydrodynamic radius further comprises calculating a convection front height ratio $h$ expected for a pure convection regime.

3. The method of claim 2, wherein the convection front height ratio $h$ is calculated from the distance $l_1$ between the first residence time and a point of injection of the solute into the capillary, the distance $l_2$ between the second residence time and the point of injection of the solute into the capillary, and the initial length $l_{inj}$ of the solute injected into the capillary.

4. The method of claim 2 or claim 3, wherein the step of deriving a value of the diffusion coefficient or hydrodynamic radius further comprises calculating the proportion $f$ of the solute that dispersed between the first residence time and the second residence time.

5. The method of claim 4, wherein the proportion $f$ is calculated using the actual front height ratio $A_2/A_1$ and the convection front height ratio $h$.

6. The method of any preceding claim, wherein the step of determining the first front amplitude comprises:

   determining a first time window during which a solute front is expected to reach the first residence time; and
   determining the maximum front amplitude of the first Taylorgram in the first time window; and

   wherein the step of determining the second front amplitude comprises:

   determining a second time window during which a solute front is expected to reach the second residence time; and
   determining the maximum front amplitude of the second Taylorgram in the second time window.

7. The method of claim 6, wherein the first time window or the second time window is determined using the pressure at which the solute was injected into the capillary and the viscosity of the solution.

8. The method of any of claims 4 to 7, further comprising the step of determining a relationship between a diffusion coefficient and the proportion $f$ of a test sample of known diffusion coefficient.

9. The method of any preceding claim, further comprising calculating a hydrodynamic radius of molecules of the solute from the calculated diffusion coefficient.

10. The method of any preceding claim, wherein the first and/or second Taylorgram is measured at a time corresponding to a dimensionless residence time outside the limits of Taylor dispersion.

11. A method of measuring a diffusion coefficient or hydrodynamic radius of a solute in a solution flowing in a capillary, comprising:

  providing a solution flowing in a capillary;
  providing a first detector at a first residence time and a second detector at a second residence time;
  injecting a solute at a pressure into the capillary;
  detecting a measure of the concentration of the solute at the first residence time using the first detector and obtaining a first Taylorgram from the measurements of the first detector;
  detecting a measure of the concentration of the solute at the second residence time using the second detector obtaining a second Taylorgram from the measurements of the second detector; and
  determining a diffusion coefficient of the solute using the method of any of claims 1 to 10.

12. The method of claim 11, wherein the measure of concentration of the solute detected by the first and/or second detectors is the absorption of light of the solute or the refractive properties of the solute.

13. The method of claim 11 or claim 12, wherein the solute is injected into the capillary as a slug of solute or as a pulse of solute.

14. An apparatus for determining a diffusion coefficient of a solute comprising a processor, the apparatus configured to perform a method of any preceding claim.

15. The apparatus of claim 14, further comprising an instrument for performing a Taylor dispersion analysis, so as to obtain a Taylorgram.

Figure 1

Figure 2

Figure 3

Figure 4

Figure 5

Figure 6

103

701

Determine first time window

702

Determine peak in first time window

104

703

Determine second time window

704

Determine peak in second time window

Figure 7

800

803

806

801 → 805 → 802

804

Figure 8

Figure 9

Figure 10

Figure 11

Figure 12

Figure 13

Figure 14

Figure 15

Figure 16

Figure 17

Europäisches
Patentamt

European
Patent Office

Office européen
des brevets

# EUROPEAN SEARCH REPORT

Application Number

EP 16 15 7467

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | LATUNDE-DADA SEYI ET AL: "Analytical mitigation of solute-capillary interactions in double detection Taylor Dispersion Anal", JOURNAL OF CHROMATOGRAPHY, vol. 1408, 7 July 2015 (2015-07-07), pages 255-260, XP029254067, ISSN: 0021-9673, DOI: 10.1016/J.CHROMA.2015.07.015 | 1,6,7,9, 11-15 | INV. G01N15/06 |
| Y | * abstract * <br> * figures 1-6 * <br> * table 1 * <br> * equations 6,7 * | 2-5,8,10 | |
| Y | SEYI LATUNDE-DADA ET AL: "Application of the Exact Dispersion Solution to the Analysis of Solutes beyond the Limits of Taylor Dispersion", ANALYTICAL CHEMISTRY, vol. 87, no. 15, 10 July 2015 (2015-07-10), pages 8021-8025, XP055220492, ISSN: 0003-2700, DOI: 10.1021/acs.analchem.5b02159 <br> * abstract * <br> * figures 2,3 * <br> * equations 6,9 * | 2-5,8,10 | |

-/--

TECHNICAL FIELDS
SEARCHED      (IPC)

G01N
B01L

The present search report has been drawn up for all claims

| Place of search | Date of completion of the search | Examiner |
|---|---|---|
| The Hague | 28 July 2016 | Dregely, Daniel |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

# EUROPEAN SEARCH REPORT

Application Number

EP 16 15 7467

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | JOSEPH CHAMIEH ET AL: "Taylor dispersion analysis with two detection points on a commercial capillary electrophoresis apparatus", JOURNAL OF CHROMATOGRAPHY, ELSEVIER SCIENCE PUBLISHERS B.V, NL, vol. 1235, 28 February 2012 (2012-02-28), pages 174-177, XP028478238, ISSN: 0021-9673, DOI: 10.1016/J.CHROMA.2012.02.049 [retrieved on 2012-02-28] * abstract * * figure 3 * | 1-15 | |
| A | HERVÉ COTTET ET AL: "Determination of Individual Diffusion Coefficients in Evolving Binary Mixtures by Taylor Dispersion Analysis: Application to the Monitoring of Polymer Reaction", ANALYTICAL CHEMISTRY, vol. 82, no. 5, 1 March 2010 (2010-03-01), pages 1793-1802, XP055220511, ISSN: 0003-2700, DOI: 10.1021/ac902397x * abstract * * figures 1,4 * | 1-15 | TECHNICAL FIELDS SEARCHED (IPC) |

-/--

The present search report has been drawn up for all claims

| Place of search | Date of completion of the search | Examiner |
|---|---|---|
| The Hague | 28 July 2016 | Dregely, Daniel |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

**EUROPEAN SEARCH REPORT**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | JENSEN SABRINE S ET AL: "Insulin diffusion and self-association characterized by real-time UV imaging and Taylor dispersion analysis", JOURNAL OF PHARMACEUTICAL AND BIOMEDICAL ANALYSIS, NEW YORK, NY, US, vol. 92, 26 January 2014 (2014-01-26), pages 203-210, XP028661944, ISSN: 0731-7085, DOI: 10.1016/J.JPBA.2014.01.022 * abstract * * figures 1,3 * * table 1 * | 1-15 | |
| A | US 2013/186184 A1 (GOODALL DAVID [GB]) 25 July 2013 (2013-07-25) * figures 1-6 * | 1-15 | |
| A | WO 2005/033672 A1 (CALIPER LIFE SCIENCES INC [US]; TRIPATHI ANUBHAV [US]; MOLHO JOSH [US]) 14 April 2005 (2005-04-14) * figures 1,2,5 * | 1-15 | TECHNICAL FIELDS SEARCHED (IPC) |

The present search report has been drawn up for all claims

| Place of search | Date of completion of the search | Examiner |
|---|---|---|
| The Hague | 28 July 2016 | Dregely, Daniel |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 16 15 7467

This annex lists the patent family members relating to the patent documents cited in the above-mentioned European search report.
The members are as contained in the European Patent Office EDP file on
The European Patent Office is in no way liable for these particulars which are merely given for the purpose of information.

28-07-2016

| Patent document cited in search report | | Publication date | Patent family member(s) | | Publication date |
|---|---|---|---|---|---|
| US 2013186184 | A1 | 25-07-2013 | CN | 103270403 A | 28-08-2013 |
| | | | EP | 2625503 A1 | 14-08-2013 |
| | | | JP | 2013539047 A | 17-10-2013 |
| | | | US | 2013186184 A1 | 25-07-2013 |
| | | | WO | 2012046054 A1 | 12-04-2012 |
| WO 2005033672 | A1 | 14-04-2005 | US | 2005182573 A1 | 18-08-2005 |
| | | | WO | 2005033672 A1 | 14-04-2005 |

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

• **LATUNDE-DADA ; SEYI et al.** Methodologies for the rapid determination of the diffusion interaction parameter using Taylor dispersion analysis. *Analytical Methods,* 2016, vol. 8.2, 386-392